# EUROPÄISCHE PATENTSCHRIFT

(11) **EP 3 487 376 B1**
(45) Veröffentlichungstag und Bekanntmachung des Hinweises auf die Patenterteilung: **27.03.2024**
(21) Anmeldenummer: 17736903.0
(22) Anmeldetag: 29.06.2017
(51) Int. Cl.: A47L 15/00

(54) **STEUERUNG EINES GESCHIRRSPÜLERS**
CONTROL OF A DISHWASHER
COMMANDE D'UN LAVE-VAISSELLE

(30) Priorität: 19.07.2016 DE 102016213171
(43) Veröffentlichungstag der Anmeldung: 29.05.2019
(73) Patentinhaber: BSH Hausgeräte GmbH, 81739 München (DE)
(72) Erfinder: HAIDACHER, Florian, 83115 Neubeuern (DE); HECKES, Matthias, 80807 München (DE); HÄPP, Claudia, 85591 Vaterstetten (DE)
(86) Internationale Anmeldenummer: PCT/EP2017/066137
(87) Internationale Veröffentlichungsnummer: WO 2018/015124

(56) Entgegenhaltungen:
- EP-A1- 2 913 906
- DE-A1-102008 042 290
- US-A1- 2011 209 729

## Beschreibung

Die Erfindung betrifft die Steuerung eines Geschirrspülers. Insbesondere betrifft die Erfindung eine interaktive Anpassung einer Ablaufsteuerung eines Geschirrspülers an Vorgaben eines Benutzers.

### Stand der Technik

Ein Geschirrspüler kann Geschirr nach unterschiedlichen Programmen behandeln, um es zu reinigen. Die Programme können an unterschiedliche Beladungsmengen oder unterschiedliche Arten von Geschirr - etwa Töpfe, Teller oder Gläser - angepasst sein und sich beispielsweise in einer Ablaufdauer oder einer Menge zugegebenem Reinigungsmittel unterscheiden. Einige Geschirrspüler erlauben es, eine Option zu einem Programm zu wählen. Eine Option kann beispielsweise einen beschleunigten Ablauf oder eine besondere Vorbehandlung des zu reinigenden Geschirrs umfassen.

US 2011/0209729 A1 betrifft eine Technik zur dynamischen Anpassung eines Reinigungsprogramms für einen Geschirrspüler nach einer Beurteilung des Reinigungsergebnisses durch einen Benutzer.

DE 10 2008 042 290 A1 betrifft die Steuerung eines Hausgeräts in Abhängigkeit einer benutzergesteuerten Eingabe seiner Beurteilung eines durch das Hausgerät absolvierten Prozesses.

Nicht alle Möglichkeiten, die ein Geschirrspüler bietet, können durch eine bekannte interaktive Programmanpassung genutzt werden. Eine Anpassung der Programmsteuerung an Gewohnheiten oder Wünsche eines Benutzers können derzeit nicht erfasst werden.

Es ist eine Aufgabe der Erfindung, eine verbesserte interaktive Anpassung einer Ablaufsteuerung eines Geschirrspülers zu ermöglichen.

### Offenbarung der Erfindung

Erfindungsgemäß wird diese Aufgabe durch die Gegenstände der unabhängigen Patentansprüche 1, 6, 7 und 8 gelöst. Die abhängigen Patentansprüche geben Ausführungsformen der Erfindung an.

Ein erfindungsgemäßes Verfahren zum Steuern eines Geschirrspülers umfasst Schritte des Erfassens einer Benutzerpräferenz für einen Reinigungslauf des Geschirrspülers; des Abtastens eines ersten und eines zweiten von Parametern, die einem Reinigungslauf des Geschirrspülers zugeordnet sind, über mehrere Reinigungsläufe hinweg, und die jeweils Einfluss auf einen vorbestimmten Teilaspekt des Reinigungslaufs haben; des Ausgebens einer Aufforderung zur Eingabe eines Hinweises auf eine Zufriedenheit des Benutzers mit einem vorbestimmten Teilaspekt des Reinigungslaufs; des Erfassens einer Benutzereingabe, die auf dessen Zufriedenheit mit dem Reinigungslauf bezüglich des Teilaspekts hinweist; des Bestimmens einer Optimierung eines der Parameter bezüglich des Teilaspekts in Abhängigkeit der Benutzereingabe und der Benutzerpräferenz. Dabei ist jedem Parameter eine Kostenangabe zugeordnet und eine Änderung des Parameters mit der höheren Kostenangabe wird erst dann bestimmt, wenn eine Änderung des anderen Parameters für eine hinreichende Optimierung nicht ausreicht

Die allgemeine Benutzerpräferenz kann das Ergebnis eines Reinigungslaufs oder eine Randbedingung umfassen. Das Ergebnis kann beispielsweise sauberes Geschirr, eine niedrige Umweltbelastung, niedrige Energiekosten, einen geringen Verschleiß, eine schonende Behandlung oder eine kurze Dauer des Reinigungslaufs betreffen. Die Randbedingung kann beispielsweise eine bevorzugte Betriebszeit (etwa in der Nacht oder werktags am Vormittag), einen bevorzugten Füllgrad (etwa mehr als ein vorbestimmter Schwellenwert) oder einen leisen Betrieb betreffen.

Die Benutzerpräferenzen können auf unvereinbare Änderungen eines Parameters hinweisen. Beispielsweise kann eine erste Benutzerpräferenz einer kurzen Laufzeit durch eine hohe Wassertemperatur erzielt werden, aber eine zweite Benutzerpräferenz nach niedrigen Energiekosten aber eine niedrige Wassertemperatur erfordern. Durch das Erfassen der Zufriedenheit des Benutzers mit einem Reinigungslauf kann dieser scheinbare Widerspruch aufgelöst werden. So kann beispielsweise bestimmt werden, welche der Präferenzen dem Benutzer wichtiger ist oder es kann eine Parametrierung gefunden wird, die beide Präferenzen vereinbart, in obigem Beispiel etwa der Betrieb bei niedriger Wassertemperatur unter vermehrter Zugabe von Reinigungsmittel oder bei erhöhtem Wasserdruck.

Durch diese Vorgehensweise kann der Reinigungslauf verbessert an die konkreten Präferenzen und die Bewertung des Benutzers angepasst werden. Parameter für den Reinigungslauf können ein an den Benutzer angepasstes Programm für den Reinigungslauf bilden. Es ist insbesondere bevorzugt, dass der Parameter derart optimiert wird, dass Fähigkeiten des Geschirrspülers verbessert ausgenutzt werden. Beispielsweise kann eine bekannte Optimierung auf ein Ergebnis des Reinigungslaufs Möglichkeiten unausgeschöpft lassen, die ein Beladungssensor, eine Zeolith-Trocknung oder ein Sensor für organische Verbindungen bieten. Durch die interaktive Optimierung können diese Technologien in den Optimierungsprozess eingebunden werden. Außerdem können die oben erwähnten Randbedingungen in die Optimierung einfließen, sodass der Reinigungsablauf verbessert auf den Benutzer eingestellt werden kann.

Es ist bevorzugt, dass ein Hinweis an den Benutzer zur Anpassung eines Parameters auf der Basis der bestimmten Optimierung bereitgestellt wird. Anders ausgedrückt kann eine Empfehlung an den Benutzer ausgegeben werden, einen bestimmten Parameter selbst manuell zu ändern. Es hat sich gezeigt, dass eine Beobachtung mit anschließender statistischer Auswertung des Benutzerverhaltens beim Betrieb eines Geschirrspülers nicht ausreicht, um den Benutzer zu einem geänderten Verhalten zu bewegen. Durch die Bereitstellung eines konkreten Vorschlags kann der Benutzer verbessert in die Lage versetzt werden, zu entscheiden, ob er eine bestimmte Optimierung durchführen möchte oder nicht. In einer anderen Ausführungsform kann der Parameter automatisch optimiert werden. Insbesondere ein Parameter, der durch den Benutzer nicht unmittelbar veränderbar ist oder der bevorzugt in Kombination mit anderen Parametern geändert wird, kann so verbessert optimiert werden.

Die Benutzereingabe wird auf einen vorbestimmten Teilaspekt des Reinigungslaufs bezogen. Dazu kann eine Aufforderung zur Eingabe eines Hinweises auf eine Zufriedenheit des Benutzers mit dem vorbestimmten Teilaspekt des Reinigungslaufs ausgegeben werden und der Parameter kann auf der Basis der Benutzereingabe bezüglich des Teilaspekts optimiert werden. Unterschiedliche Teilaspekte können nacheinander oder gleichzeitig optimiert werden. Es ist besonders bevorzugt, dass zunächst möglichst rasch Parameter gefunden werden, die die Zufriedenheit des Benutzers sicherstellen. Im Anschluss kann versucht werden, die Zufriedenheit weiter zu steigern, indem die Teilaspekte optimiert werden. Ein Teilaspekt kann beispielsweise die Reinigung, ein weiterer die Trocknung und ein dritter den Glanz auf Glas und Besteck betreffen. Noch ein weiterer Teilaspekt kann eine Randbedingung des Reinigungslaufs betreffen. Betrifft ein Parameter mehrere Teilaspekte, so können diese auch gemeinsam oder in einer vorbestimmten Abfolge optimiert werden.

Es ist weiterhin bevorzugt, dass die Aufforderung in Abhängigkeit der Benutzerpräferenz bestimmt wird. Eine Benutzerpräferenz kann abstrakt sein und möglicherweise mehrere Parameter betreffen. Die Aufforderung kann derart gegeben werden, dass die Benutzerpräferenz hinterfragt oder genauer analysiert wird. Beispielsweise kann eine Benutzerpräferenz nach gründlicher Reinigung aufgeschlüsselt werden in die Reinigung von Besteck, Töpfen und Tellern oder in die zuverlässige Entfernung bestimmter Verschmutzungen. Dadurch kann eine verbesserte Benutzerbefragung durchgeführt werden, ohne den Benutzer mit einer Vielzahl detaillierter Fragen zu überfordern.

Es ist weiterhin bevorzugt, dass die Aufforderung in Abhängigkeit von Parametern gegeben wird, die bereits optimiert wurden. Dadurch kann sichergestellt werden, dass die Optimierung eines Parameters nicht zu einer Unzufriedenheit bezüglich eines anderen Teilaspekts geführt hat. Liegt eine neue Unzufriedenheit vor, so kann eine weitere Optimierung durchgeführt werden.

Der Parameter wird über mehrere Reinigungsläufe sukzessive geändert, bis eine Benutzereingabe auf eine hinreichende Optimierung des Teilaspekts hinweist. Häufig können zur Zufriedenheitssteigerung mit einem Teilaspekt unterschiedliche Parameter optimiert werden. Im Allgemeinen ist mit jedem Vorteil, den die Änderung eines Parameters bedingt, auch ein Nachteil verbunden. Es ist daher wünschenswert, einen Parameter möglichst gerade so weit zu optimieren, bis die Benutzerzufriedenheit sichergestellt ist. Ein Nachteil, beispielsweise ein hoher Energieverbrauch oder eine lange Reinigungsdauer, kann dadurch minimiert werden.

Es werden wenigstens zwei Parameter bestimmt, die Einfluss auf den Teilaspekt haben. Dabei ist jedem Parameter eine Kostenangabe oder eine Kostenfunktion zugeordnet. Häufig ist dem Parameter mit hohen Kosten auch eine hohe Wirksamkeit zugeordnet und umgekehrt. Bevorzugt wird zunächst der Parameter mit der niedrigeren Kostenangabe geändert. Kann dabei eine hinreichende Optimierung erzielt werden, wird der Parameter mit der höheren Kostenangabe nicht geändert. Erst wenn eine Änderung des ersten Parameters für eine hinreichende Optimierung nicht ausreicht, kann der zweite Parameter mit der höheren Kostenangabe geändert werden.

Dadurch kann eine Eskalation über zwei oder mehr Parameter bereitgestellt werden, die sicherstellt, dass die Zufriedenheit des Benutzers mit einem vorbestimmten Teilaspekt unter möglichst geringen Kosten erzielt wird. Die Kosten können als Nachteil aufgefasst werden und beispielsweise eine Umweltbelastung, eine Reinigungsdauer oder einen Energieverbrauch umfassen. In einer Ausführungsform sind unterschiedliche Kosten bzw. Nachteile in einem Punktesystem zusammengefasst, sodass unterschiedliche Nachteile in einer vorbestimmten Weise miteinander verglichen werden können.

Es ist weiterhin bevorzugt, dass die zwei oder mehreren Parameter unter Minimierung der Summe der Kostenangaben optimiert werden, sobald die Benutzereingabe erstmals auf eine hinreichende Optimierung des Teilaspekts hinweist. Die Kosten zur Erzielung der Benutzerzufriedenheit bezüglich eines Teilaspekts können so verbessert gesenkt werden.

Ein Computerprogrammprodukt umfasst Programmcodemittel zur Durchführung des oben beschriebenen Verfahrens, wenn das Computerprogrammprodukt auf einer Ausführungsvorrichtung ausgeführt wird oder auf einem computerlesbaren Datenträger gespeichert ist.

Eine Vorrichtung zur Steuerung eines Geschirrspülers umfasst eine erste Eingabeeinrichtung zur Erfassung einer Benutzerpräferenz für einen Reinigungslauf des Geschirrspülers; eine Schnittstelle zur Abtastung eines ersten und eines zweiten Parameters, die einem Reinigungslauf des Geschirrspülers zugeordnet sind, über mehrere Reinigungsläufe hinweg, und die jeweils Einfluss auf einen vorbestimmten Teilaspekt des Reinigungslaufs haben; eine zweite Eingabeeinrichtung zur Erfassung einer Benutzereingabe, die auf dessen Zufriedenheit mit dem Reinigungslauf hinweist; und eine Verarbeitungseinrichtung zur Bestimmung einer Optimierung eines der Parameter bezüglich des Teilaspekts in Abhängigkeit der Benutzereingabe und der Benutzerpräferenz. Dabei ist jedem Parameter eine Kostenangabe zugeordnet und eine Änderung des Parameters mit der höheren Kostenangabe wird erst dann bestimmt, wenn eine Änderung des anderen Parameters für eine hinreichende Optimierung nicht ausreicht.

Die beiden Eingabeeinrichtungen können auch zusammenfallen. In einer bevorzugten Ausführungsform wird zur Interaktion des Benutzers mit dem Geschirrspüler ein mobiles Gerät verwendet, das drahtlos mit dem Geschirrspüler gekoppelt ist und als Eingabe- und Ausgabeeinrichtung verwendbar ist. Die Verarbeitungseinrichtung kann zur Steuerung des Geschirrspülers eingerichtet oder mit einer Schnittstelle zu einer anderen Vorrichtung ausgestattet sein, die die Steuerung des Geschirrspülers durchführt. Die Verarbeitungseinrichtung ist bevorzugt dazu eingerichtet, das oben beschriebene Verfahren durchzuführen. Dabei ist die Verarbeitungseinrichtung üblicherweise in den Geschirrspüler eingebaut. In einer weiteren Ausführungsform kann ein Teil der Verarbeitung auch mittels einer anderen Verarbeitungseinrichtung durchgeführt werden, die insbesondere drahtlos kontaktiert werden kann. Diese Verarbeitungseinrichtung kann in das oben erwähnte mobile Gerät integriert sein oder über ein Datennetzwerk erreichbar sein. Insbesondere kann ein Server, der beispielsweise über das Internet kontaktiert werden kann, einen Teil der Verarbeitung durchführen. Zusätzlich oder alternativ zur Auslagerung von Verarbeitungskapazität kann auch Speicherkapazität in entsprechender Weise ausgelagert sein. Insbesondere historische Daten über zurückliegende Reinigungsläufe des Geschirrspülers können so detailliert abgespeichert und verbessert analysiert werden.

Die mit Bezug auf das Verfahren offenbarten Merkmale sind analog auf das erfindungsgemäße Computerprogrammprodukt und die erfindungsgemäße Vorrichtung anwendbar.

### Kurze Beschreibung der Figuren

Ausführungsformen der Erfindung werden nun unter Bezug auf die beiliegenden Figuren genauer beschrieben, in denen:
- Fig. 1: ein System mit einem Geschirrspüler;
- Fig. 2: ein Ablaufdiagramm eines Verfahrens;
- Fig. 3: ein Ablaufdiagramm eines weiteren Verfahrens;
- Fig. 4: ein Ablaufdiagramm eines ersten Teils des Verfahrens von Fig. 3;
- Fig. 5: ein Ablaufdiagramm eines zweiten Teils des Verfahrens von Fig. 3; und
- Fig. 6: ein Ablaufdiagramm eines dritten Teils des Verfahrens von Fig. 3
darstellt.

### Genaue Beschreibung von Ausführungsbeispielen

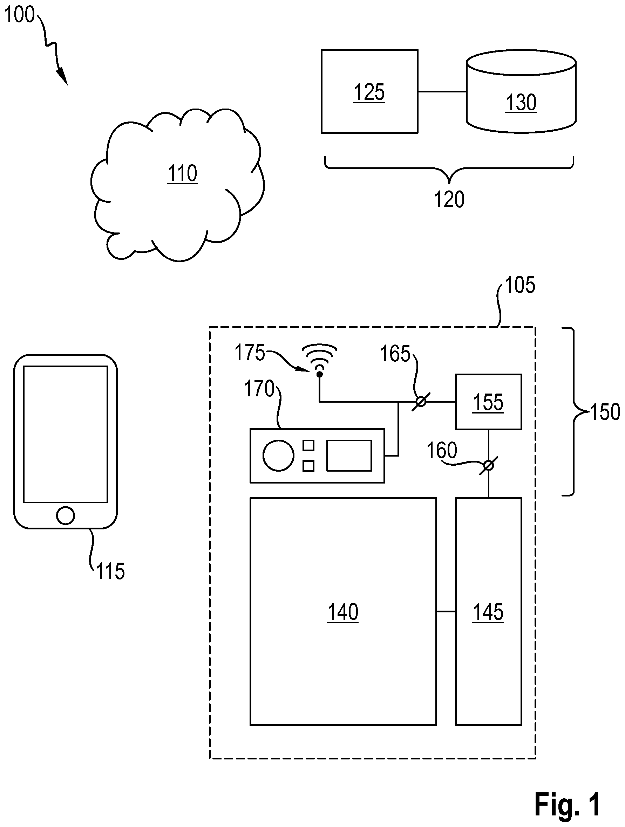

Figur 1 zeigt ein System 100 und einen Geschirrspüler 105. Zusätzlich umfasst das System 100 ein optionales Datennetz 110, ein optionales mobiles Gerät 115 und einen optionalen Server 120, der eine Verarbeitungseinrichtung 125 und/oder einen Speicher 130 umfasst. Der Geschirrspüler 105, das mobile Gerät 115 und der Server 120 können über das Datennetz 110 miteinander verbunden sein. Dabei kann das Datennetz 110 ein drahtloses, drahtgebundenes oder gemischtes Datennetz umfassen. In einer Ausführungsform umfasst das Datennetz 110 das Internet oder ein Mobilfunknetz.

Der Geschirrspüler 105 umfasst einen Reinigungsraum 140 zur Aufnahme von Geschirr, eine Ablaufsteuerung 145, um das Geschirr im Reinigungsraum 140 zu behandeln, und eine Vorrichtung 150 zur Steuerung eines Reinigungsvorgangs des Geschirrs. Die Ablaufsteuerung 145 kann eine Steuereinrichtung, einen Sensor oder einen Aktor umfassen und ist bevorzugt dazu eingerichtet, den Reinigungsprozess selbst zu steuern, also beispielsweise ein Zuführen oder Abpumpen von Wasser, eine Zugabe von Reinigungsmittel oder ein Aktivieren einer Heizung oder einer Umwälzpumpe.

Die Vorrichtung 150 umfasst eine Verarbeitungseinrichtung 155, die mittels einer ersten Schnittstelle 160 mit der Ablaufsteuerung 145 verbunden ist, sowie bevorzugt eine zweite Schnittstelle 165, die in einer ersten Ausführungsform mit einer am Geschirrspüler 105 angebrachten Eingabeeinrichtung 170 oder in einer zweiten Ausführungsform mit einer drahtlosen Schnittstelle 175 verbunden ist. Diese beiden Ausführungsformen können auch miteinander kombiniert werden. Die Eingabeeinrichtung 170 ist bevorzugt zur Eingabe durch einen Benutzer eingerichtet und kann weiter bevorzugt auch als Ausgabevorrichtung verwendet werden, um mit dem Benutzer in eine zweiseitige Interaktion zur treten. Unter Verwendung der drahtlosen Schnittstelle 175 kann das mobile Gerät 115 zur ein- oder zweiseitigen Interaktion mit dem Benutzer verwendet werden. In einer Ausführungsform ist die Vorrichtung 150 mit der Ablaufsteuerung 145 integriert ausgeführt.

Um das Geschirr im Reinigungsraum 140 zu behandeln, kann die Ablaufsteuerung 145 unterschiedlich angesteuert werden. Beispielsweise können Aktoren der Ablaufsteuerung 145 zur Steuerung eines Wasserdrucks, einer Wassermenge, einer Wassertemperatur, einer Menge und eines Zeitpunkts einer Zugabe von Reinigungsmittel oder Klarspüler sowie für zahlreiche andere Möglichkeiten verwendet werden, auf das Geschirr im Reinigungsraum 140 einzuwirken. Als Reinigungslauf wird vorliegend eine Abfolge von Einwirkungen mittels der Ablaufsteuerung 145 auf das Geschirr im Reinigungsraum 140 angesehen. Die Abfolge kann fest vorgegeben oder durch Abtastwerte der Sensoren der Ablaufsteuerung 145 gesteuert werden. Zusätzlich kann die Abfolge durch einen oder mehrere Parameter gesteuert werden. Ein Parameter kann beispielsweise einen Schwellenwert bestimmen, den ein Sensorwert überschreiten muss, um eine weitere Aktion der Ablaufsteuerung 145 auszulösen.

Es wird vorgeschlagen, die Vorrichtung 150 so auszuführen, dass einer oder mehrere der Parameter im Laufe mehrerer Reinigungsabläufe des Geschirrspülers 105 optimiert werden. Dazu sollen einerseits eine oder mehrere Benutzerpräferenzen mittels der Eingabeeinrichtung 170 oder des mobilen Geräts 115 angegeben werden, die den Reinigungsablauf betreffen. Andererseits soll eine Zufriedenheit des Benutzers mit einem Reinigungslauf mittels der Eingabeeinrichtung 170 oder des mobilen Geräts 115 abgefragt werden. Eine Optimierung eines oder mehrerer Parameter erfolgt dann in Abhängigkeit der Benutzereingaben sowie optional noch weiterer Informationen. Zu diesen weiteren Informationen können beispielsweise eine Zeit, ein Datum, ein Wochentag, eine frühere Auswahl von Parametern, Optionen oder Spülprogrammen für einen Reinigungslauf sowie ein Wert eines der Sensoren der Ablaufsteuerung 145 verwendet werden.

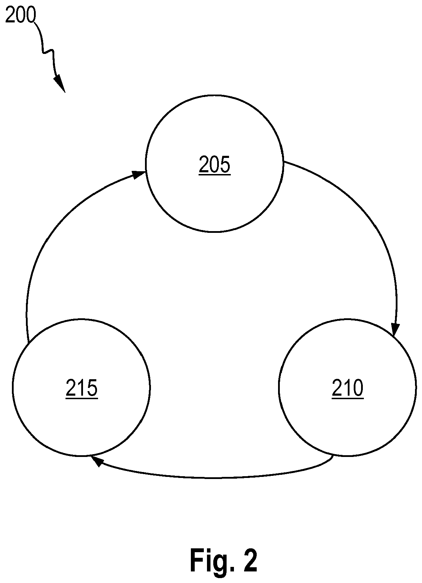

Figur 2 zeigt ein Ablaufdiagramm eines Verfahrens 200 zur Steuerung des Geschirrspülers 105 von Figur 1. In einem ersten Schritt 205 erfolgt eine Eingabe des Benutzers. In einem folgenden Schritt 210 wird die Eingabe des Benutzers zu seiner Unterstützung bei der Steuerung eines Reinigungslaufs des Geschirrspülers 105 verwendet. Dazu kann beispielsweise ein Programm ausgewählt oder optimiert werden, ein Programm kann zeitverzögert gestartet oder ereignisgesteuert unterbrochen werden. In einem weiteren Schritt 215 erfolgt eine Rückmeldung an den Benutzer, um die Unterstützung im Schritt 210 genauer zu erläutern. Der Benutzer kann dadurch eine durchgeführte Optimierung oder Auswahl besser verstehen und sie im Folgenden im Schritt 205 bewerten. Die dargestellten Schritte 205 bis 215 werden bevorzugt nach Art einer Endlosschleife mehrfach durchlaufen, um eine ständige Interaktion mit dem Ziel der Optimierung des Reinigungslaufs des Geschirrspülers 105 durchzuführen.

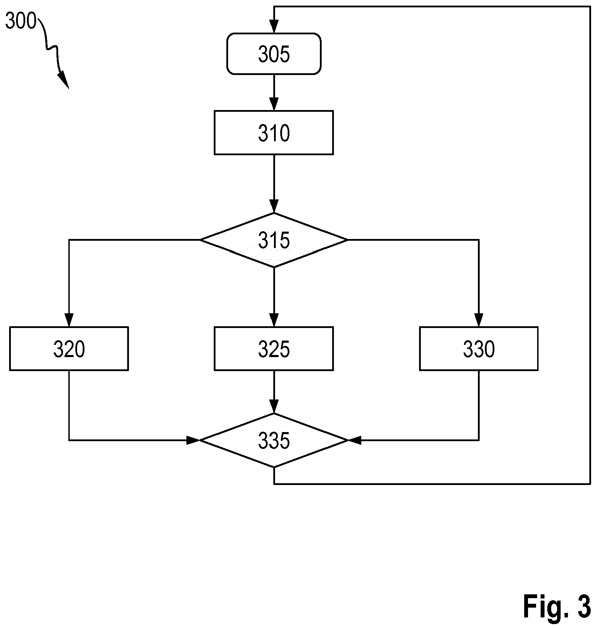

Figur 3 zeigt ein Ablaufdiagramm eines weiteren Verfahrens 300 zur Steuerung des Geschirrspülers 105 aus Figur 1. Das Verfahren 300 kann als exemplarische Verfeinerung des Verfahrens 200 aufgefasst werden.

In einem Schritt 305 erfolgt ein Reinigungslauf, dabei werden Parameter und Optionen nach zuvor abgespeicherten Vorgaben oder einer Eingabe des Benutzers verwendet. In einem Schritt 310 ist der Reinigungslauf beendet. In einem Schritt 315 kann der Benutzer den Reinigungslauf bewerten. Dazu kann er seine allgemeine Zufriedenheit mit dem Reinigungslauf ausdrücken oder es können ihm interaktiv mehr oder weniger spezifische Fragen zu seiner Zufriedenheit mit einem oder mehreren Teilaspekten des Reinigungslaufs gestellt werden, die der Benutzer dann beantworten kann.

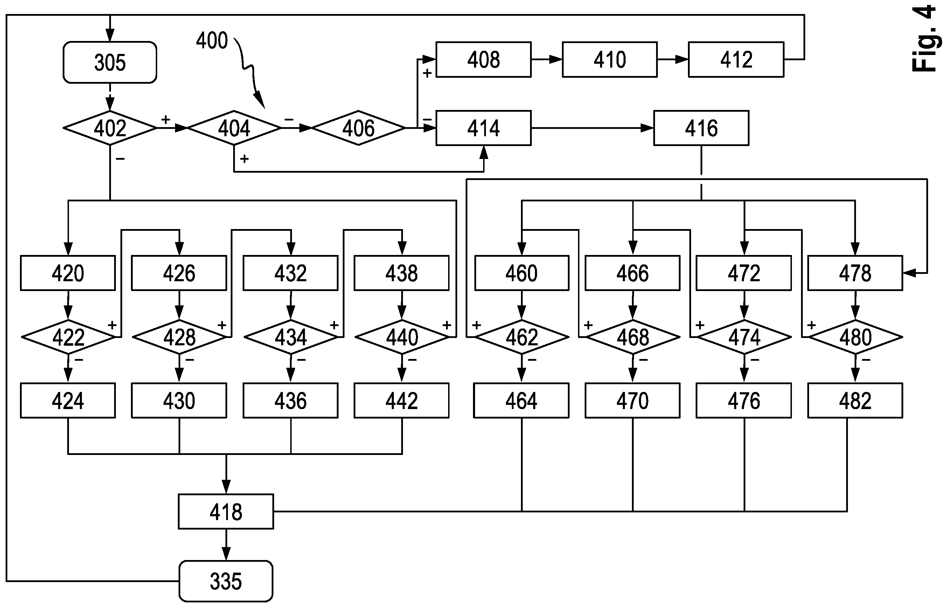

In der dargestellten Ausführungsform kann eine Optimierung von Parametern bezüglich dreier unterschiedlicher Teilaspekte durchgeführt werden. In einem Schritt 320 kann der Teilaspekt des Reinigens nach einem Verfahren 400, in einem Schritt 325 der Teilaspekt des Trocknens mit einem Verfahren 500 und in einem Schritt 330 der Aspekt des Glanzspülens mit einem Verfahren 600 durchgeführt werden. Es sind auch andere oder zusätzliche Teilaspekte möglich. Üblicherweise wird zu jeder Zeit nur ein Teilaspekt optimiert, um möglichst aussagekräftige Bewertungen des Benutzers erhalten zu können. Die Verfahren 400 bis 600 werden im Folgenden mit Bezug auf die Figuren 4 bis 6 genauer beschrieben. Dabei handelt es sich jeweils um eine exemplarische Ausführungsform zur Optimierung von Parametern bezüglich des jeweiligen Teilaspekts.

Figur 4 zeigt ein Ablaufdiagramm eines Verfahrens 400 als mögliche Konkretisierung des Schritts 320 des Verfahrens 300 von Figur 3. Rein exemplarisch werden hier einer oder mehrere Parameter optimiert, die sich auf den Teilaspekt des Reinigens des Geschirrs beziehen.

In einem Schritt 402 wird festgestellt, ob ein Benutzer beim vergangenen Reinigungsdurchlauf zufrieden mit dem vorliegenden Teilaspekt war. Dazu können dem Benutzer eine oder mehrere Fragen gestellt werden. Ist der Benutzer zufrieden, so kann in einem Schritt 404 geprüft werden, ob die Parameter, die dem vorliegenden Teilaspekt zugrunde liegen, über länger als eine vorbestimmte Zeit nicht mehr geändert wurden. Wurden die Parameter erst kürzlich geändert, so wird in einem Schritt 406 überprüft, ob der gleiche Parameter zum zweiten Mal geändert wurde. Ist dies der Fall, so können in einem Schritt 408 die derzeit geltenden Parameter festgehalten und in einem Schritt 410 abgespeichert werden, um eine Regelschwingung zu vermeiden. In einem Schritt 412 kann dann dazu übergegangen werden, einen weiteren Teilaspekt zu optimieren. Im vorliegenden Beispiel kann also dafür gesorgt werden, dass im Verfahren 300 von Figur 3 auf den Schritt 315 der Schritt 325 oder der Schritt 330 folgt.

Wurde im Schritt 404 festgestellt, dass die Parameter länger nicht geändert wurden, oder im Schritt 406, dass nicht der gleiche Parameter zum zweiten Mal geändert wurde, so wird bevorzugt im Schritt 414 dazu übergegangen, einen Parameter zu verringern.

Vorliegend wird davon ausgegangen, dass für die Beeinflussung der Qualität der Reinigung beispielhaft vier Parameter zur Verfügung stehen, namentlich eine Laufzeit, ein Mechanikparameter, eine Reinigungsmittelzugabe und eine Temperatur. Dabei bezeichnet die Laufzeit eine Dauer, über die das Geschirr im Reinigungsraum 140 einer Behandlung unterzogen wird, der Mechanikparameter beispielsweise einen Wasserdruck oder eine Wassermenge, die Reinigungsmittelzugabe die Menge eines zugesetzten Reinigungsmittels und die Temperatur eine Wassertemperatur während der Reinigung. Es wird ferner davon ausgegangen, dass ein Aufwand zur Erhöhung des jeweiligen Parameters in der Reihenfolge ihrer Nennung ansteigt. Dabei ist die gewählte Reihenfolge exemplarisch für eine angenommene Kostenfunktion oder Kostenangabe zu verstehen.

Die Struktur des Verfahrens 400 sieht vor, zunächst in Schritten 420 bis 442 einen oder mehrere der angegebenen Parameter schrittweise zu erhöhen, bis die Zufriedenheit des Benutzers erzielt werden kann. Anschließend wird versucht, die Parameter in Schritten 460 bis 482 wieder abzusenken, ohne die Zufriedenheit des Benutzers zu verlieren. Das Erhöhen der Parameter erfolgt in der Reihenfolge der zugeordneten Kostenangaben, sodass zuerst die Laufzeit verlängert wird, falls dies nicht ausreicht, ein Reinigungsparameter erhöht wird, falls dies nicht ausreicht, eine Reinigungsmittelzugabe erhöht wird und falls auch dies nicht ausreicht, die Temperatur erhöht wird. Umgekehrt wird beim Absenken von Parametern in den Schritten 460 bis 481 zunächst in einem Schritt 416 bestimmt, welcher der Parameter zuletzt verändert wurde, um zunächst diesen abzusenken und somit eine möglichst große Kostenersparnis zu erwirken. Kann der Parameter nicht ohne Verlust der Zufriedenheit des Benutzers abgesenkt werden, so wird der nächst weniger kostenintensive Parameter abgesenkt. Diese Vorgehensweise wird als Eskalation in den Schritten 420 bis 442 und als Deeskalation in den Schritten 460 bis 482 bezeichnet. Nach der Veränderung eines Parameters wird bevorzugt in einem Schritt 418 eine Information an den Benutzer ausgegeben, um diesen von der Änderung des Parameters zu unterrichten und ein verbessertes Verständnis des Benutzers anzustreben. Damit ist das Verfahren 400 beendet und es erfolgt bevorzugt ein Rücksprung ins Verfahren 300. Nach einem optionalen Übernehmen der veränderten Parameter im Schritt 335 kann das Verfahren 300 zum Schritt 305 zurückkehren, erneut durchlaufen und ggf. wieder das Verfahren 400 aufrufen.

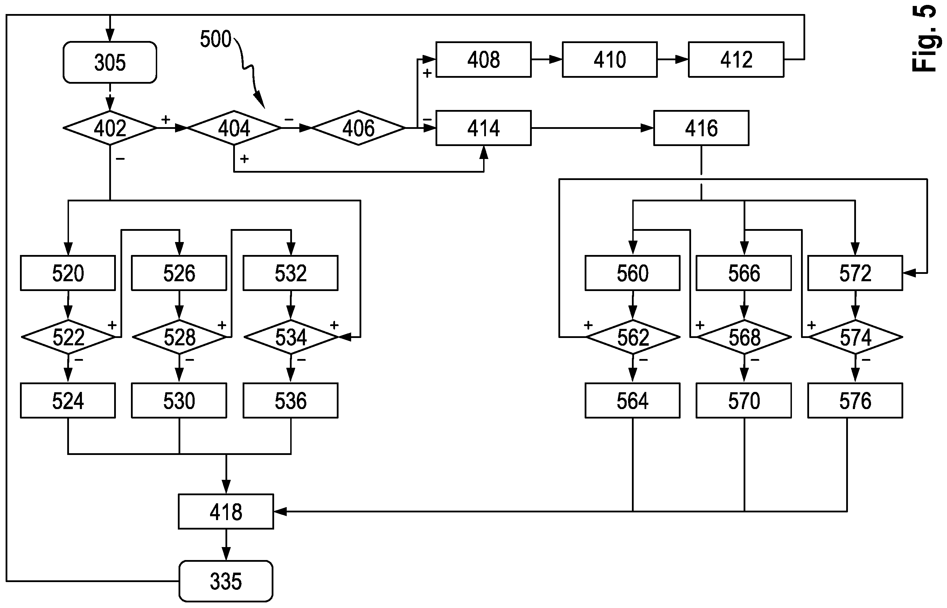

Figur 5 zeigt ein Ablaufdiagramm eines Verfahrens 500 zur Optimierung von Parametern bezüglich des Teilaspekts der Trocknung von Geschirr im Rahmen eines Reinigungslaufs des Geschirrspülers 105 von Figur 1. Das Verfahren 500 ist eine mögliche Konkretisierung des Schritts 325 des Verfahrens 300 von Figur 3.

Die Struktur des Verfahrens 500 entspricht der des Verfahrens 400, wobei jedoch die Eskalation in Schritten 520 bis 536 und die Deeskalation in Schritten 560 bis 576 erfolgt. Dabei wird davon ausgegangen, dass Parameter, die den vorliegenden Teilaspekt betreffen, in aufsteigender Reihenfolge ihrer Kosten eine Laufzeit, eine Klarspülerzugabe und eine Temperatur betreffen. Die Laufzeit gibt an, wie lange das Geschirr getrocknet wird, die Klarspülerzugabe gibt an, wie viel eines Klarspülers vor oder während der Trocknung in den Reinigungsraum 140 dosiert wird und die Temperatur bezieht sich auf die Lufttemperatur während der Trocknungsphase.

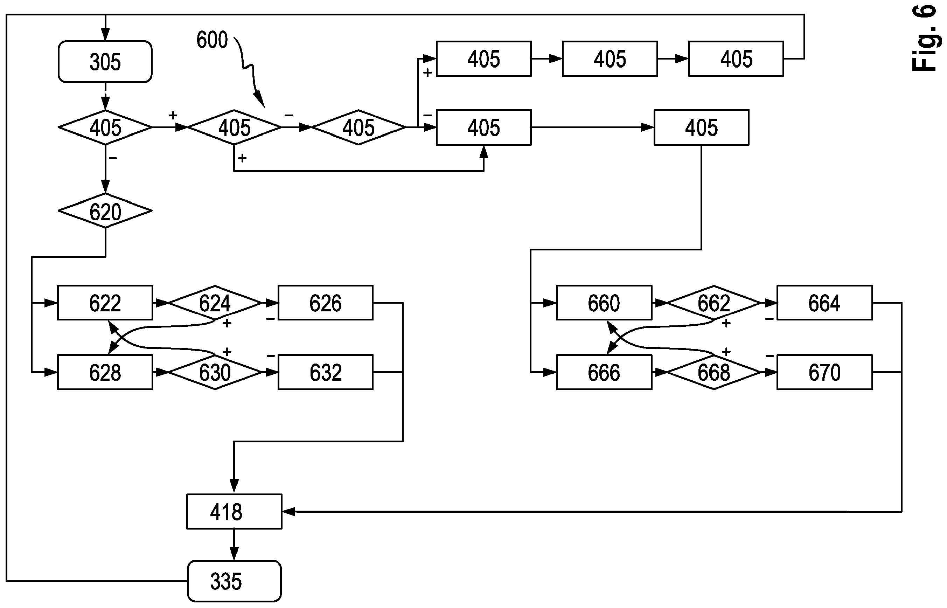

Figur 6 zeigt ein Ablaufdiagramm eines Verfahrens 600 zur Optimierung eines Glanzes auf gereinigtem Geschirr, insbesondere auf Gläsern oder Besteck. Das Verfahren 600 ist als mögliche Konkretisierung des Schritts 330 des Verfahrens 300 von Figur 3 angegeben und entspricht in seiner Struktur im Wesentlichen der der Verfahren 400 und 500. Die Eskalation wird hier in Schritten 622 bis 632 und die Deeskalation in Schritten 660 bis 670 durchgeführt. Rein beispielhaft erfolgt hier keine Eskalation, sondern das Erhöhen eines Parameters wird in Schritten 620 bis 632 und das Verringern in Schritten 660 bis 670 durchgeführt. Im Fall von mangelnder Benutzerzufriedenheit wird im Schritt 620 zunächst festgestellt, ob sich auf dem Geschirr Flecken oder Schlieren gezeigt haben. Im Fall von Schlieren wird mit dem Schritt 622 fortgefahren, im Fall von Flecken mit dem Schritt 628. Allgemein werden Schlieren durch die Erhöhung einer Klarspülerzugabe bekämpft, während Flecken durch Anpassung einer Einstellung für Wasserhärte verringert werden sollen. Die Klarspülerzugabe und die Einstellung für Wasserhärte können gegenseitig voneinander abhängig sein, sodass die Änderung des einen Parameters eine Änderung des anderen Parameters erforderlich machen kann.

Für die Optimierung von Parametern bezüglich unterschiedlicher Teilaspekte in den Verfahren 400 bis 600 können die gleichen Parameter unterschiedliche Effekte erzielen. Beispielsweise wird die Klarspülerzugabe sowohl bei der Trocknung als auch bei der Glanzerzielung optimiert. Es ist daher bevorzugt, dass nach der Optimierung von Parametern zugunsten eines Teilaspekts eine Optimierung bezüglich eines anderen Teilaspekts wiederholt wird, um auszuschließen, dass ein unerwünschter Seiteneffekt eine Verschlechterung des anderen Teilaspekts auslöst.

Die mit Bezug auf die Figuren gemachten Erläuterungen sind rein illustrativ und nicht beschränkend zu verstehen.

### Bezugszeichen

- 100: System
- 105: Geschirrspüler
- 110: Datennetz
- 115: mobiles Gerät
- 120: Server
- 125: Verarbeitungseinrichtung
- 130: Speicher

- 140: Reinigungsraum
- 145: Ablaufsteuerung

- 150: Vorrichtung
- 155: Verarbeitungseinrichtung
- 160: erste Schnittstelle
- 165: zweite Schnittstelle
- 170: Eingabeeinrichtung
- 175: drahtlose Schnittstelle

- 200: Verfahren
- 205: Eingabe
- 210: Unterstützung
- 215: Rückmeldung

- 300: Verfahren
- 305: Geschirrspüler ist aktiv
- 310: Reinigungslauf ist beendet
- 315: Benutzereingabe: Bewertung des Reinigungslaufs
- 320: weiter mit Verfahren 400
- 325: weiter mit Verfahren 500
- 330: weiter mit Verfahren 600
- 335: Parameter übernehmen
- 400: Verfahren
- 402: Benutzer zufrieden mit Teilaspekt?
- 404: Parameter wurden länger nicht geändert?
- 406: gleicher Parameter wurde zum zweiten Mal geändert?
- 408: Parameter bleiben gleich
- 410: Parameter abspeichern
- 412: nächsten Teilaspekt optimieren
- 414: Parameter verringern
- 416: zuletzt erhöhten Parameter verringern
- 418: Ausgabe: Information an Benutzer

- 420: Parameter: Laufzeit
- 422: Laufzeit wurde bereits erhöht?
- 424: Laufzeit erhöhen
- 426: Parameter: Mechanik
- 428: Mechanikparameter wurde bereits erhöht?
- 430: Mechanikparameter erhöhen
- 432: Parameter: Reinigungsmittelzugabe
- 434: Reinigungsmittelzugabe wurde bereits erhöht?
- 436: Reinigungsmittelzugabe erhöhen
- 438: Parameter: Temperatur
- 440: Temperatur wurde bereits erhöht?
- 442: Temperatur erhöhen

- 460: Parameter: Laufzeit
- 462: Laufzeit wurde bereits verringert?
- 464: Laufzeit verringern
- 466: Parameter: Mechanik
- 468: Mechanikparameter wurde bereits verringert?
- 470: Mechanikparameter verringern
- 472: Parameter: Reinigungsmittelzugabe
- 474: Reinigungsmittelzugabe wurde bereits verringert?
- 476: Reinigungsmittelzugabe verringern
- 478: Parameter: Temperatur
- 480: Temperatur wurde bereits verringert?
- 482: Temperatur verringern

- 500: Verfahren
- 520: Parameter: Laufzeit
- 522: Laufzeit wurde bereits erhöht?
- 524: Laufzeit erhöhen
- 526: Parameter: Klarspülerzugabe
- 528: Klarspülerzugabe wurde bereits erhöht?
- 530: Klarspülerzugabe erhöhen
- 532: Parameter: Temperatur
- 534: Temperatur wurde bereits erhöht?
- 536: Temperatur erhöhen

- 560: Parameter: Laufzeit
- 562: Laufzeit wurde bereits verringert?
- 564: Laufzeit verringern
- 566: Parameter: Klarspülerzugabe
- 568: Klarspülerzugabe wurde bereits verringert?
- 570: Klarspülerzugabe verringern
- 572: Parameter: Temperatur
- 574: Temperatur wurde bereits verringert?
- 576: Temperatur verringern

- 600: Verfahren
- 620: Flecken oder Schlieren?

- 622: Schlieren; Parameter: Klarspülerzugabe
- 624: Klarspülerzugabe wurde bereits bis Maximum erhöht?
- 626: Klarspülerzugabe erhöhen
- 628: Flecken; Parameter: Wasserhärte
- 630: Einstellung für Wasserhärte wurde bereits bis Maximum erhöht?
- 632: Einstellung für Wasserhärte erhöhen

- 660: Parameter: Klarspülerzugabe
- 662: Klarspülerzugabe wurde bereits bis Minimum verringert?
- 664: Klarspülerzugabe verringern
- 666: Parameter: Wasserhärte
- 668: Einstellung für Wasserhärte wurde bereits bis Minimum verringert?
- 670: Einstellung für Wasserhärte verringern

## Patentansprüche

1. Verfahren (200, 300) zum Steuern eines Geschirrspülers (105), wobei das Verfahren (300) folgende Schritte umfasst:
- Erfassen (205) einer Benutzerpräferenz für einen Reinigungslauf des Geschirrspülers (105);
- Abtasten (305) eines ersten und eines zweiten Parameters, die einem Reinigungslauf des Geschirrspülers (105) zugeordnet sind, über mehrere Reinigungsläufe hinweg, und die jeweils Einfluss auf einen vorbestimmten Teilaspekt des Reinigungslaufs haben;
- Ausgeben einer Aufforderung zur Eingabe eines Hinweises auf eine Zufriedenheit des Benutzers mit einem vorbestimmten Teilaspekt des Reinigungslaufs;
- Erfassen (315) einer Benutzereingabe, die auf dessen Zufriedenheit mit dem Reinigungslauf bezüglich des Teilaspekts hinweist;
- Bestimmen (325, 325, 330) einer Optimierung eines der Parameter bezüglich des Teilaspekts in Abhängigkeit der Benutzereingabe und der Benutzerpräferenz;
**dadurch gekennzeichnet, dass**
- mehrere Reinigungsläufe durchgeführt werden und einer der Parameter über die Reinigungsläufe sukzessive geändert wird, bis eine Benutzereingabe (402) auf eine hinreichende Optimierung des Teilaspekts hinweist, und
- jedem Parameter eine Kostenangabe zugeordnet ist und eine Änderung des Parameters mit der höheren Kostenangabe erst dann bestimmt wird, wenn eine Änderung des anderen Parameters für eine hinreichende Optimierung nicht ausreicht.

2. Verfahren (300) nach Anspruch 1, wobei ein Hinweis an den Benutzer zur Anpassung des Parameters auf der Basis der bestimmten Optimierung bereitgestellt wird.

3. Verfahren (300) nach Anspruch 1 oder 2, wobei die Aufforderung in Abhängigkeit der Benutzerpräferenz bestimmt wird.

4. Verfahren (300) nach einem der vorangehenden Ansprüche, wobei die Aufforderung in Abhängigkeit von Parametern gegeben wird, die bereits optimiert wurden.

5. Verfahren (300) nach einem der vorangehenden Ansprüche, wobei die Parameter unter Minimierung der Summe der Kostenangaben optimiert werden, sobald die Benutzereingabe (402) erstmals auf eine hinreichende Optimierung des Teilaspekts hinweist.

6. Computerprogrammprodukt mit Programmcodemitteln zur Durchführung eines Verfahrens (300) nach einem der vorangehenden Ansprüche, wenn das Computerprogrammprodukt auf einer Verabeitungsvorrichtung (155) einer Vorrichtung nach Anspruch 8 ausgeführt wird.

7. Computerlesbarer Datenträger mit einem Computerprogrammprodukt nach Anspruch 6.

8. Vorrichtung (150) zur Steuerung eines Geschirrspülers (105), wobei die Vorrichtung folgendes umfasst:
- eine erste Eingabeeinrichtung (115, 170) zur Erfassung einer Benutzerpräferenz für einen Reinigungslauf des Geschirrspülers (105);
- eine Schnittstelle (160) zur Abtastung eines ersten und eines zweiten Parameters, die einem Reinigungslauf des Geschirrspülers (105) zugeordnet sind, über mehrere Reinigungsläufe hinweg, und die jeweils Einfluss auf einen vorbestimmten Teilaspekt des Reinigungslaufs haben;
- eine zweite Eingabeeinrichtung (115, 170) zur Erfassung einer Benutzereingabe, die auf dessen Zufriedenheit mit dem Reinigungslauf hinweist; und
- eine Verarbeitungseinrichtung (155) zur Bestimmung einer Optimierung eines der Parameter bezüglich des Teilaspekts in Abhängigkeit der Benutzereingabe und der Benutzerpräferenz,
**dadurch gekennzeichnet, dass**
- mehrere Reinigungsläufe durchgeführt werden und einer der Parameter über die Reinigungsläufe sukzessive geändert wird, bis eine Benutzereingabe (402) auf eine hinreichende Optimierung des Teilaspekts hinweist, und
- jedem Parameter eine Kostenangabe zugeordnet ist und eine Änderung des Parameters mit der höheren Kostenangabe erst dann bestimmt wird, wenn eine Änderung des anderen Parameters für eine hinreichende Optimierung nicht ausreicht.

## Claims

1. Method (200, 300) for controlling a dishwasher (105), wherein the method (300) comprises the following steps:
- capturing (205) a user preference for a cleaning cycle of the dishwasher (105);
- reading (305), over a plurality of cleaning cycles, a first and a second parameter associated with a cleaning cycle of the dishwasher (105) and having an effect on a predetermined sub-aspect of the cleaning cycle;
- outputting a prompt to input an indication of user satisfaction with a predetermined sub-aspect of the cleaning cycle;
- capturing (315) a user input that indicates the satisfaction thereof with the cleaning cycle with regard to the sub-aspect;
- determining (325, 325, 330) an optimisation of one of the parameters with regard to the sub-aspect on the basis of the user input and the user preference;
**characterised in that**
- a number of cleaning cycles are carried out and one of the parameters is changed successively over the cleaning cycles until a user input (402) indicates sufficient optimisation of the sub-aspect, and
- a cost figure is associated with each parameter and a change in the parameter with the higher cost figure is only determined when a change in the other parameter is not sufficient for an adequate optimisation.

2. Method (300) according to claim 1, wherein the user is provided with advice to adapt the parameter on the basis of the specific optimisation.

3. Method (300) according to claim 1 or 2, wherein the prompt is determined on the basis of user preference.

4. Method (300) according to one of the preceding claims, wherein the prompt is given according to parameters that have already been optimised.

5. Method (300) according to one of the preceding claims, wherein the parameters are optimised with minimisation of the sum of the cost figures once the user input (402) indicates for the first time that the sub-aspect has been sufficiently optimised.

6. Computer program product comprising program code means for performing a method (300) according to one of the preceding claims when the computer program product is executed on an execution device (155) of an apparatus according to claim 8.

7. Computer-readable data storage medium with a computer program product according to claim 6.

8. Apparatus (150) for controlling a dishwasher (105), wherein the apparatus comprises the following:
- a first input device (115, 170) for capturing a user preference for a cleaning cycle of the dishwasher (105);
- an interface (160) for reading, over a plurality of cleaning cycles, a first and a second parameter associated with a cleaning cycle of the dishwasher (105) and having an effect on a predetermined sub-aspect of the cleaning cycle;
- a second input device (115, 170) for capturing a user input that indicates the satisfaction thereof with one of the cleaning cycles; and
- a processing device (155) for determining an optimisation of one of the parameters with regard to the sub-aspect on the basis of the user input and the user preference.
**characterised in that**
- a number of cleaning cycles are carried out and one of the parameters is changed successively over the cleaning cycles until a user input (402) indicates sufficient optimisation of the sub-aspect,
- a cost figure is associated with each parameter and a change in the parameter with the higher cost figure is only determined when a change in the other parameter is not sufficient for an adequate optimisation.

## Revendications

1. Procédé (200, 300) de commande d'un lave-vaisselle (105), dans lequel le procédé (300) comprend les étapes suivantes :
- détection (205) d'une préférence d'utilisateur pour un cycle de nettoyage du lave-vaisselle (105) ;
- échantillonnage (305) d'un premier et d'un deuxième paramètre, lesquels sont subordonnés à un cycle de nettoyage du lave-vaisselle (105), valables sur plusieurs cycles de nettoyage, et lesquels ont à chaque fois une influence sur un aspect partiel prédéterminé du cycle de nettoyage ;
- émission d'une demande d'entrée d'une information sur la satisfaction de l'utilisateur relative à un aspect partiel prédéterminé du cycle de nettoyage ;
- détection (315) d'une entrée d'utilisateur, laquelle informe de la satisfaction de celui-ci avec le cycle de nettoyage par rapport à l'aspect partiel ;
- détermination (325, 325, 330) d'une optimisation d'un des paramètres relativement à l'aspect partiel en fonction de l'entrée d'utilisateur et de la préférence d'utilisateur ;
**caractérisé en ce que**
- plusieurs cycles de nettoyage sont réalisés, et l'un des paramètres est modifié successivement sur les cycles de nettoyage, jusqu'à ce qu'une entrée d'utilisateur (402) informe d'une optimisation suffisante de l'aspect partiel, et
- une donnée de coût est subordonnée à chaque paramètre et une modification du paramètre avec la donnée de coût supérieure est alors seulement déterminée, quand une modification de l'autre paramètre ne suffit pas pour une optimisation suffisante.

2. Procédé (300) selon la revendication 1, dans lequel une information à l'utilisateur relative à l'adaptation du paramètre est fournie sur base de l'optimisation déterminée.

3. Procédé (300) selon la revendication 1 ou 2, dans lequel la demande est déterminée en fonction de la préférence d'utilisateur.

4. Procédé (300) selon l'une des revendications précédentes, dans lequel la demande est donnée en fonction de paramètres qui ont déjà été optimisés.

5. Procédé (300) selon l'une des revendications précédentes, dans lequel les paramètres sont optimisés en réduisant au minimum la somme des données de coût, dès que l'entrée d'utilisateur (402) informe pour la première fois d'une optimisation suffisante de l'aspect partiel.

6. Produit de programme informatique comprenant des moyens de codage programme pour l'exécution d'un procédé (300) selon l'une des revendications précédentes, quand le produit de programme informatique est exécuté sur un dispositif de traitement (155) d'un appareil selon la revendication 8.

7. Support de données pouvant être lu par un ordinateur comprenant un produit de programme informatique selon la revendication 6.

8. Appareil (150) de commande d'un lave-vaisselle (105), dans lequel l'appareil comprend ce qui suit :
- un premier dispositif d'entrées (115, 170) pour la détection d'une préférence d'utilisateur pour un cycle de nettoyage du lave-vaisselle (105) ;
- une interface (160) pour l'échantillonnage d'un premier et d'un deuxième paramètre, lesquels sont subordonnés à un cycle de nettoyage du lave-vaisselle (105), valables sur plusieurs cycles de nettoyage, et lesquels ont à chaque fois une influence sur un aspect partiel prédéterminé du cycle de nettoyage ;
- un deuxième dispositif d'entrées (115, 170) pour la détection d'une entrée d'utilisateur, laquelle informe de la satisfaction de celui-ci avec le cycle de nettoyage ; et
- un dispositif de traitement (155) pour la détermination d'une optimisation d'un des paramètres relativement à l'aspect partiel en fonction de l'entrée d'utilisateur et de la préférence d'utilisateur,
**caractérisé en ce que**
- plusieurs cycles de nettoyage sont réalisés, et l'un des paramètres est modifié successivement sur les cycles de nettoyage, jusqu'à ce qu'une entrée d'utilisateur (402) informe d'une optimisation suffisante de l'aspect partiel, et
- une donnée de coût est subordonnée à chaque paramètre et une modification du paramètre avec la donnée de coût supérieure est alors seulement déterminée, quand une modification de l'autre paramètre ne suffit pas pour une optimisation suffisante.
